# EUROPEAN PATENT SPECIFICATION

(11) **EP 1 691 621 B1**
(45) Date of publication and mention of the grant of the patent: **23.10.2013**
(21) Application number: 04818584.7
(22) Date of filing: 15.11.2004
(51) Int. Cl.: A23C 19/068, A23L 1/23, A23C 19/084

(54) **DAIRY PRODUCT AND PROCESS**
MILCHPRODUKT UND VERFAHREN
PRODUIT LAITIER ET PROCEDE DE PRODUCTION

(30) Priority: 14.11.2003 NZ 52955403
(43) Date of publication of application: 23.08.2006
(73) Proprietor: Fonterra Co-Operative Group Limited, Auckland (NZ)
(72) Inventor: ELSTON, Peter Dudley, Palmerston North (NZ); BUWALDA, Robbie John, Palmerston North (NZ); SMITH, Daniel, Palmerston North (NZ); DAVEY, Graham Peter, Palmerston North (NZ); FITZSIMONS, Warren John, Palmerston North (NZ)
(74) Representative: Barton, Matthew Thomas
(86) International application number: PCT/NZ2004/000289
(87) International publication number: WO 2005/046344

(56) References cited:
- EP-A1- 0 981 965
- EP-A2- 1 053 689
- WO-A1-2004/017742
- DE-C- 810 575
- FR-A1- 2 603 607
- GB-A- 1 057 170
- GB-A- 1 361 817
- US-A- 3 184 318
- US-A- 4 133 895
- US-A- 4 205 090
- US-A- 4 212 947
- US-A- 4 824 682
- US-A- 4 832 964
- US-B1- 6 177 118
- US-B1- 6 183 804
- US-B1- 6 406 724
- JARMUL I; REPS A; WISNIEWSKA K; JEDRYCHOWSKI L: "Stabilization of Camembert cheese by deep-freezing. (translated)", LAIT, vol. 65, 1985, pages 213-220, XP002594513,
- 'Cheese Varieties and Descriptions', 01 January 1953, U.S. DEPARTMENT OF AGRICULTURE, AGR. HANDBOOK NO. 54 deel GEORGE P. SANDERS: 'About Gammelost', XP055029636
- 'Chesse and Fermented Milk Foods', 01 January 1997, F.V. KOSIKOWSKI, L.L.C., WESTPORT, CONNECTICUT 06880, U.S., ISBN 978-0-96-564560-7 deel FRANK V. KOSIKOWSKI ET AL: 'Fig. 169: Flow diagram of continuous production of a Blue cheese food employing ultrafiltrated skim milk and lipase-spore reacted fat.', page 282, XP055029624

## Description

### FIELD OF THE INVENTION

The present invention relates to a novel process of making blue cheese.

### BACKGROUND OF THE INVENTION

Mould ripened cheese has been prepared widely across Europe for many centuries using often labour intensive methods. This generic class of cheese includes some well-known varieties such as Roquefort, Stilton, Gorgonzola, Blue (Bleu, Danablu), Camembert, and Brie.

The characteristics of mould ripened cheeses depend greatly on the ripening process during which the selected strains of mould mycelia infiltrate the cheese causing extensive development of flavour and the characteristic texture of the product.

In traditional mould ripened cheese a range of organisms are utilised. These include, but are not limited to, fungi from the families of *Penicillium, Mucor, Cladosporium, Geotrichum, Epicoccum,* and *Sporotrichum.* Selected strains of the *Penicillum* family are the most widely utilised commercially.

Consumer tastes for mould-ripened cheeses vary considerably; some preferring strong flavours, others more bland. This presents manufacturers with the problem of identifying the best time to place quantities of product on the market for sale - too soon means that there is little ripening, slight flavour development and appeal to only a limited segment of the market; too much ripening and the flavour becomes too intense for broad market appeal. This problem also affects the consumer who is faced with a risky purchase as a result.

Some cheese manufacturers have developed various methods in an attempt to overcome these problems. One known method used to achieve greater control of the flavour development of mould ripened cheese is the careful selection of the varieties of mould. However this makes the control of the microbiological state of the product and potential contamination during the process more critical.

Another method is to market separate products from different maturation periods (such as 21, 27 and 35 day old Camembert).

A further known method is to standardise the flavour of such cheese by ripening the cheese to the optimal extent and then heat-treating the cheese to arrest all microbiological processes. However, this process can cause undesirable flavour and unusual textural changes in the cheese. As a result, heat treated cheeses are often marked down in price.

Some manufacturers try to avoid this problem by making comparatively small batches on a regular basis throughout the year. The consumer can then buy regularly a relatively immature product, which can be stored by the consumer until the preferred state of ripening is reached. This is not ideal for the manufacturer as they have a product that cannot be shipped any great distance. Furthermore the consumer may not have ideal conditions for holding the cheese for further ripening, for example the refrigerator, which is often the most convenient domestic cheese ripening environment, risks contamination of the cheese by taints from other foods present.

It is also known that most cheese produced by conventional means cannot, in general, be stored frozen without major disruption to the texture of the curd mass. Camembert is an exception in that it can be frozen to arrest biochemical activity and successfully thawed.

A further problem in the conventional manufacture of mould-ripened cheese is that the traditional flavour and texture develops over a period that takes one or more months. This incurs costs both in holding of the stock in the maturation stage as well as the uncertainty of quality until the finished product has attained the target level of maturation. Quality defects that take months to become evident represent expensive failures that the consumer ultimately carries.

Traditional Camembert and Brie cheese varieties ripen progressively from the surface towards the core. The ripened zone typically attains a soft spreadable consistency. This material is too soft to shred satisfactorily.

Gamelost, a semi-hard cheese from Norway, is made by first precipitating casein from skim milk by the addition of acid and cooking at about 65°C. The casein is separated off from the whey, collected and formed into a mass and moulded by heating for about 2 hours in boiling whey. After cooling (the following day) the surface of the cheese is sprayed with a suspension of Mucor mould and then placed in storage to ripen (Fox P.F. (editor), Cheese: chemistry, physics and microbiology. Vol 2 Major cheese groups. 2nd edn. Chapman & Hall, London). This traditional cheese adopts a direct acid addition method to produce curd and then uses heat to form a coagulated cheese mass. The mould is then applied to the surface of the cheese mass. Little fat can be incorporated efficiently into the curd using this technique because of losses into the whey bath. Ripening will be slow depending on the size of the cheese mass because the mould will have difficulty penetrating towards the core of the mass.

A process that speeds up the production of mould ripened cheese is known in the art. Kosikowski & Mistry - Cheese and Fermented Milk Foods Vol. 1. 3rd edn., 1997, teaches a recombining process to prepare blue cheese that is ready for immediate consumption following packaging. Skim milk is concentrated using ultrafiltration. Concomitantly, a cream or fat-rich flavour concentrate is prepared using predominately cream, spores of *P. roqueforti,* microbial lipase and optionally starter bacteria or whey. The mixture is fermented to produce the required flavour stock. The flavour stock is blended with the ultrafiltered retentate and heated to about 77°C for about 3 minutes. The cream cheese-like mass is packaged and chilled and is ready for consumption. This process has many attractive features. However, it does not suggest the means to control the calcium content of the retentate and thereby manipulate the texture of the product in the subtle ways that is expected by the consumer of traditionally matured mould-ripened cheeses. There is no suggestion in the art that a mould flavoured cheese prepared by a recombining process is freeze-thaw stable. No process for the preparation of mould flavoured cheese has revealed a means to shred the cheese.

"About Gammelost", From: Cheese Varieties and Descriptions; U.S. Department of Agriculture, AGR. Handbook No. 54; by George P. Sanders, 1953 discloses a method of producing a blue cheese employing ultrafiltrated skim milk.

US 6,406,724 discloses a process of making cheese from a milk protein concentrate and a flavour concentrate.

US 4,205,090 discloses a preparation of cheese comprising ultrafiltration of a milk product to produce a cheese milk and coagulation with rennet.

FR 2,603,601 discloses a process for making cheese comprising mixing a protein concentrate, fat and caseinate and heating.

EP 1 053 689-A2 discloses a process for making an enzyme-modified cheese starting from a milk protein concentrate.

US 4,212,947 discloses a method for obtaining mycelium which may be used as an additive to cheeses.

Jarmul I. et al. (1985), LAIT, vol. 65 pp, 213 - 220; XP002594513 discloses a method of stabilising camembert cheese by deep freezing.

US 3,184,318 discloses a process for the production of a granular cheese product by freezing.

Any process for making cheese or a cheese precursor that provides reliable control of the desired flavour and texture of mould-ripened cheese and allows rapid production would be desirable.

It is an object of the present invention to provide such a process and/or at least to provide the public with a useful choice.

According to the present invention, there is provided a process for preparing a blue cheese, the process comprising:
(a) providing a protein concentrate comprising whey protein concentrate,
(b) providing a flavour concentrate using at least one strain of organism,
(c) heating at 90 to 92°C for between 10 seconds and 30 minutes to form a coagulated cheese mass,
(d) adding the flavour concentrate before, during or after step (c).

According to the present invention, there is further provided a process for preparing a blue cheese, the process comprising:
(a) providing a protein concentrate comprising whey protein concentrate,
(b) providing a flavour concentrate using at least one strain of organism,
(c) mixing the protein concentrate and flavour concentrate with a source of fat and/ or liquid if required and heating at 90 to 92°C for between 10 seconds and 30 minutes to form a coagulated cheese mass,
(d) cooling the resulting coagulated cheese mass to form a cheese precursor with an exposed surface,
(e) applying viable organisms to the exposed surface,
(f) allowing the cheese to ripen.

According to the present invention, there is further provided a process for preparing a blue cheese, the process comprising:
(a) providing a protein concentrate comprising whey protein concentrate,
(b) providing a flavour concentrate using at least one strain of organism,
(c) mixing the protein concentrate and flavour concentrate with a source of fat and/ or liquid if required and heating at 90 to 92°C for between 10 seconds and 30 minutes to form a coagulated cheese mass,
(d) cooling the coagulated cheese mass and mixing in a flavour concentrate containing viable organisms to form a cheese precursor,
(e) optionally dividing the cheese precursor into consumer portions,
(f) allowing the cheese precursor or the portions to ripen.

Advantageously, at step (c) mixing the protein concentrate and flavour concentrate with a source of fat and/or liquid is present.

Conveniently, the cheese or cheese precursor is divided into portions.

Preferably, the cheese is subjected to freezing. '

Advantageously, following the freezing step, the cheese is thawed and further ripening occurs.

Conveniently, the process further comprises applying viable organisms to the exposed surface, and allowing the cheese to ripen.

Preferably, the precursor cheese or the cheese is shredded or particulated.

Advantageously, the protein concentrate is selected from a milk protein concentrate, a rennetted milk or a reconstituted milk protein concentrate.

Conveniently, the flavour concentrate comprises at least one edible mould.

Preferably, the mould organism is selected from the family of *Penicillium, Mucor, Cladosporium, Geotrichum, Epicoccum,* or *Sporotrichum.*

Advantageously, the mould organism is *P. candidium* or *P. roqueforti.*

Conveniently, the flavour concentrate further comprises a flavour-enhancing bacterium, selected from cultures producing lactic acid propionic acid or butyric acid.

Preferably, the percentage of flavour concentrate relative to the total coagulated cheese mass is in the range 0.1% to 20%.

Advantageously, the fat source, which is added to the protein concentrate, is cream, butter or edible oil.

Conveniently, following the heating step, the cheese precursor is stored at a temperature between 5°C and 35°C and a relative humidity greater than 80%.

Preferably, there is facilitation of contact between air and the cheese or cheese precursor.

Advantageously, the cheese precursor is stored at a temperature between 10°C and 20°C.

Examples of ingredients which may be usefully used in any of the processes of the invention include one or more of ingredients selected from salt, acid, water or potable fluid and salts of citric acid and phosphoric acid.

Freshly prepared flavour concentrate may be used. Alternatively, the flavour concentrate may be preserved before its incorporation into the curd mass. A preferred method of preservation of the flavour concentrate is drying and a particularly preferred method is freeze-drying. Optionally, the preserved flavour concentrate may be stored and/or shipped prior to its incorporation into the curd mass.

Protein concentrate as used herein means any solution, slurry, suspension or paste of protein capable of forming a homogenous mass upon heating and subsequent cooling to room temperature. It also includes solids (for example a powder) which when mixed with liquid have the same capability. Preferably the protein concentrate is a milk protein concentrate. It may be formed from rennetted milk where the calcium concentration is controlled by manipulation of the pH at which the curd is cooked or by using acidified wash water to wash the cooked curd or both. In other preferred options, the calcium concentration in the protein concentrate is controlled using ion exchange and optional ultrafiltration as published in PCT published application WO 02/082917 or by the method described in published PCT application WO 03/069982.

Flavour concentrate as used herein means a flavourful solution, slurry, suspension, paste or powder prepared using edible fungus and/or yeast. Preferably the flavour concentrate is prepared as a result of a fermentation procedure involving the growth of at least one selected strain of edible fungus or yeast or alternatively the flavour concentrate is prepared using non-viable edible fungus and/or yeast.

The term "comprising" means "consisting of" or "including". The processes of the invention may have additional steps and ingredients. For example salt, flavouring, colouring etc. may be added.

Preferably the viable organisms used in the process of the present invention contain selected species of mould with optional bacterial cultures. Preferred cultures are selected commercial strains of lactic, propionic or butyric acid producing bacteria.

In preferred embodiments, the precursor cheese or cheese product may be frozen for storage or transport purposes.

Preferably, the mould organisms used are selected from the family of fungi. More preferably the fungi are from the families of *Penicillium, Mucor, Cladosporium, Geotrichum, Epicoccum,* and *Sporotrichum.* The *Penicillum* family is the most preferred organism; strains of *P. candidium* and P. *rogueforti* are particuarly preferred. More than one organism may be used.

Preferably, the percentage of flavour concentrate relative to the total coagulated cheese mass is in the range 0.1% to 20%, preferably 0.5% to 10%, most preferably 1% to 5%.

Preferably the protein concentrate, a fat source, and the flavour concentrate are mixed using a mixing-heating device (blender/cooker). The heat used in the cooking stage may be applied directly, indirectly or in combination. A preferred direct form of heat is culinary steam. Mixing and cooking devices may be batch or continuous.

By varying the ratio of the protein concentrate, fat and flavour concentrate in the coagulated cheese mass or cheese precursor the flavour and texture in the final product can be controlled.

The fat source is preferably cream, butter, or oil. If cream is used, it may be homogenised prior to mixing with the protein concentrate and optional ingredients. Oil or fat may be mixed with a quantity of skim milk and preferably homogenised prior to adding to the recovered curd.

The heating step is carried out by heating to between 90 to 92°C, for between 10 seconds and 30 minutes.

Preferably ripening is conducted at temperatures between 5°C and 35°C, more preferably between 10°C and 20°C and a relative humidity greater than 80%, preferably greater than 90%. The ripening period may be between 1 day and 30 days, and preferably between 5 days and 20 days.

The present invention provides a blue cheese precursor or blue cheese produced by a process according to the present invention.

A cheese precursor is any intermediate cheese product prepared from the protein concentrate before it reaches the final form presented to the consumer. A cheese precursor may undergo a variety of subsequent processing steps before becoming the final product including one or more of ripening, freezing, shredding and portioning.

Fat in dry matter in the cheese product is preferably between 10% and 80%, more preferably 20% and 60%. The protein/water ratio in the cheese product is preferably between 0.1 and 1.2 and more preferably between 0.25 and 0.8.

The invention allows rapid production of flavoured cheeses. Also in embodiments where the protein concentrate includes whey proteins, these may be retained in the cheese product.

It will be recognised by those skilled in the art that analogues of dairy products described herein can be made according to the invention using non-milk protein sources.

### Preferred embodiment - Preparation of protein concentrate

In a preferred embodiment for preparing the protein concentrate, pasteurised milk, or more preferably pasteurised skim milk (non-fat milk) from any suitable mammal is treated with an enzyme capable of converting kappa casein to para-kappa casein. The enzyme may be of animal, vegetable or microbiological origin. A preferred enzyme is rennet. The enzyme reaction is conducted at a temperature below 15°C and more preferably below 10°C, for a period preferably greater than 1 hour and preferably less than 24 hours.

Alternatively, the milk to be pasteurised may be non-fat or low fat milk may be obtained by reconstituting milk powders with a potable solvent. Suitable solvents include water or skim milk. Blends of fresh milk and reconstituted milk may also be used.

After the enzyme reaction is completed, the treated milk is acidified to a pH of about 5.4. Food approved acids can be used, such as dilute sulphuric acid. Optionally, a portion of the pasteurised skim milk may be fermented with the addition of a food approved starter culture (such as a lactic culture) to produce the required acidity.

The acidified mixture may be cooked by the application of heat to a temperature of between 30°C and 50°C and preferably between 40°C and 48°C and most preferably between 44°C and 46°C. One method of heating that can be used is by the direct addition of culinary steam. Once at the desired cooking temperature, the mixture is held for about 50 seconds before the curds and whey are separated. Preferred holding times are between 1 second and 300 seconds. Any method may be used to separate the curds and whey but a combination of screens and decanters is one method.

The dewheyed curd is then washed using water at a temperature of between 20 and 50°C, more preferably 30°C to 45°C and most preferably 35°C to 40°C for a period of a few minutes. Optionally the wash water may be acidified with a food-approved acid (such as sulphuric acid) to a pH of about 2.6. A ratio of wash-water to curd of at least 0.25:1.0 (water to starting skim milk equivalent) may be used, but a ratio of between 0.5:1.0 and 1.0:1.0 is preferred.

After washing, the curd is recovered from the wash-water using similar methods as used for curd serum separation. After dewatering, the protein concentrate has a preferred moisture content of greater than 30% w/w. More preferably the washed and dewatered protein concentrate has a moisture content between 40% and 55% w/w (wet basis).

By manipulation of the pH of the treated milk, the coagulum cooking temperature and the pH of the wash water, the divalent cation concentration in the protein concentrate may be varied at will in the range 100 mM/kg protein to 700 mM/kg protein. More preferably, the calcium content of the protein concentrate is between 150 mM Ca/kg protein and 500 mM Ca/kg protein.

Optionally at this stage, the protein concentrate may be packed and placed into storage for shipping and/or subsequent use. Optionally the protein concentrate is salted with 1% to 2% common salt, preferably 1.5-1.7% salt before being packed. Storage may be achieved by freezing the recovered curd and storing at a temperature below -10°C, more preferably below - 18°C. Alternatively the protein concentrate is used directly for conversion into the final cheese product.

In an alternative embodiment, a protein concentrate may be prepared by the hydration of milk concentrate powder (MPC). Water is a preferred hydrating agent. Preferred MPC powders are divalent depleted MPCs prepared according to techniques disclosed in NZ 511095. The hydrated MPC may contain between 20% and 85% solids, more preferably between 40% and 70% solids. Alternatively a divalent depleted retentate may be used; prepared according to techniques disclosed in NZ 511095. Preferably the divalent depleted retentate contains greater than 40% solids.

### Preferred embodiment - Preparation of flavour concentrate

A flavour concentrate may be prepared using at least one strain of mould by a variety of methods. One method of preparing a flavour concentrate has been disclosed by Kosikowski & Mistry.

A preferred method of preparing a flavour concentrate is to form a layer of cheese curd on a surface, preferably a tray. Cheese curd prepared by any convenient method is suitable as long as the water activity is greater than 80% and preferably greater than 90% and the salt concentration is less than 2% and preferably between 1% and 1.5%. The layer may be a continuous film of curd or may be particulate. Preferably the layer is less than 20 mm thick and more preferably 5mm to 10 mm thick. The curd layer is inoculated with a selected strain of viable mould spores. Preferably, the mould spores used are selected from the family of fungi. More preferably the fungi are from the families of *Penicillium, Mucor, Cladosporium, Geotrichum, Epicoccum,* and *Sporotrichum.* The *Penicillum* family is the most preferred organism; commercial strains of *P. candidium* and *P. roqueforti* are particularly preferred. Any convenient method of applying the spores may be used but spraying a mixture of spores dispersed in a sterile medium is preferred. Optionally, selected strains of bacteria and yeasts along with any nutrients may also be applied along with the spores in the medium. Preferred nutrients are fats, proteins, vitamins, enzymes and mineral salts. Preferred strains of bacteria are selected commercial cultures of lactic, propionic or butyric acid producing bacteria. The treated curd is held in an environment that facilitates rapid growth of the mould spores on the cheese substrate. Preferred conditions are temperatures between 10°C and 40°C, more preferably between 20°C and 30°C and a relative humidity of greater than 90% and preferably at least 95%. Mould growth may be continued until a highly flavoured concentrate is formed. Preferably a growing period of between 5 and 10 days is applied. Optionally, during the growing period the treated curd may be manipulated to expose untreated curd surface and further applications of spores applied.

Optionally, the flavour concentrate may be preserved for further use or shipment. Preferably the flavour concentrate may be dried, and more preferably freeze dried.

### Preferred embodiment - Preparation of cheese

The protein concentrate along with other ingredients are mixed and heated to form a coagulated cheese mass.

The protein concentrate is placed in a mixer-cooker together with cream (or butter, or a source of fat or oil), and optional ingredients. The mixer-cooker may be operated either batch-wise or continuously.

If cream is used, it may be homogenised prior to mixing with the protein concentrate and optional ingredients. Oil or fat may be mixed with a quantity of skim milk and preferably homogenised prior to adding to the recovered curd.

The mixture is then heated to between 90-92°C, for 10 seconds to 30 minutes to form a smooth emulsified gel (coagulated cheese mass). Optionally the pH of the mixture is then adjusted with a food approved acid or alkali and mixing and heating continued for between 10 seconds to 30 minutes. Any food approved acid or alkali may be used. The final pH of the coagulated cheese mass may be between 4.5 and 6.5, preferably between 5.0 and 6.0.

The mixture is then cooled to below 50°C and more preferably below 40°C. This may be conducted in the mixer-cooker or may be conducted in a dedicated cooling device to produce a precursor cheese.

At this stage the precursor cheese may be packed. Any convenient product forming, portioning and packing process may be used. The forming, portioning and packing processes used typically for processed cheese are contemplated, as are known devices to produce blocks, tubs, sausages, loafs and pottles. The packed cheese is preferably placed in chilled storage, and more preferably placed in frozen storage. Alternatively, the packed cheese may be used directly or stablised by other means known in the art.

Optionally, when the precursor cheese is cooled, frozen or thawed, it may be shredded or particulated. After shredding the cheese is packed. Bags are a preferred package.

Alternatively once cooled and formed, a concentrate of viable mould organisms is added to the precursor cheese. These organisms may be applied to the surface of the precursor cheese. The viable mould organisms may contain selected species of mould or bacteria cultures or combinations of both. Preferred organisms are those disclosed in the preparation of the flavour concentrate. A preferred means of applying the organisms is to disperse them in sterile water and spray the surface of the precursor cheese. The precursor cheese may be divided into portions before or after the application of the viable organisms.

The organisms are then allowed to ripen the precursor cheese thus producing the cheese product. The treated precursor cheese is preferably placed on a surface in a temperature and humidity controlled space for a period to allow ripening. Preferably ripening is conducted at temperatures between 5°C and 35°C, more preferably between 10°C and 20°C and a relative humidity greater than 80%, preferably greater than 90%. The ripening period may between 1 day and 30 days, and preferably between 5 days and 20 days.

Optionally the ripening of the precursor cheese mass or cheese may be expedited by facilitation of contact with air. This may be achieved for example by puncturing the cheese mass with needles or rods to allow the ingress of air. Such a technique is known in the art.

Preferably once the cheese has ripened it is packaged and stored. Freezing is an optional storage technique.

In an alternative embodiment, flavour concentrate containing viable organisms as prepared above may be added and mixed into the precursor cheese. The precursor cheese comprises 0.1% to 20%, preferably 0.5% to 10%, most preferably 2% to 5% of the flavour concentrate. Optionally once formed, the precursor cheese may be sprayed as described above. The treated precursor cheese is then ripened as above with the preference that the mass is punctured as previously described.

The coagulated cheese mass or the precursor cheese may be formed by passing through an orifice, aperture, nozzle or die, or alternatively poured onto a surface (or surfaces) thus forming a ribbon, slab, sheet or film of a suitable thickness. Optionally, the ribbon, slab, sheet or film may be cooled further to firm or harden it, by contact with cooled air, fluid or a chilled surface or combinations thereof. Preferably the ribbon, slab, sheet or film is portioned.

This ribbon, slab, sheet or film of cheese may be coated with viable organisms and then treated according to the processes described above for ripening.

Optionally, two or more layers of cheese may be laminated together. Each layer may be treated with different viable organisms.

All ranges mentioned in this patent specification are intended to inherently include all of the possible values within the stated range.

Scheme 1 is a flow chart illustrating the process of a preferred embodiment of the invention.

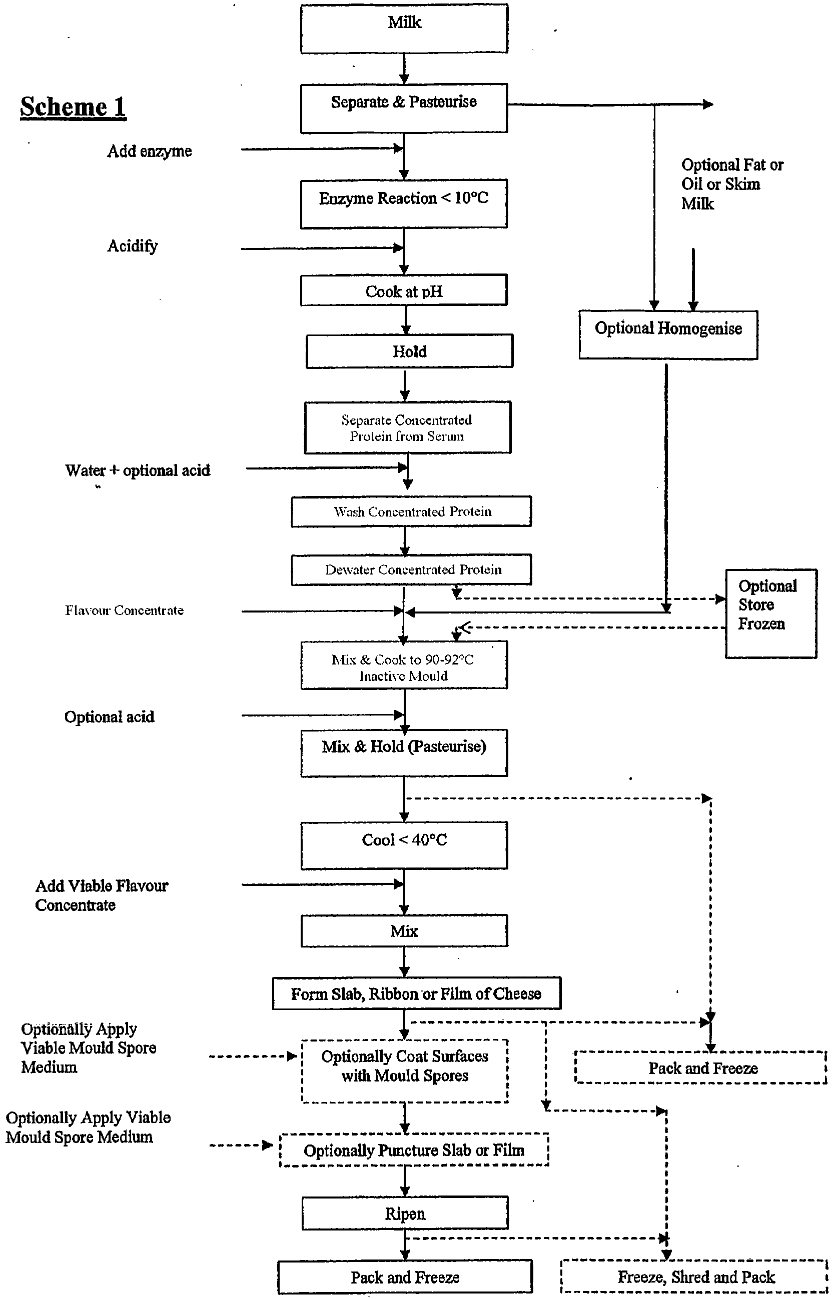

### EXAMPLES

The following Examples further illustrate practice of the invention.

### General Example: Preparation of Protein Concentrate

### Mineral acid process

Pasteurised skim milk (72°C/15 sec.) was cooled to 10°C and placed in a holding vessel. Rennet was mixed thoroughly into the skim milk at the concentration of 1 part rennet to 18,000 parts skim milk and left to react for several hours.

The renneted milk was then dosed with dilute sulphuric acid (5% w/w) to give a pH of 5.3. The acidified mixture was heated to approximately 44°C by direct steam injection to form a coagulum and held at that temperature for about 60 seconds to cook the coagulum. The serum (whey) was removed from the coagulum using a solid-bowl decanter. The recovered protein concentrate was washed at about 38°C in water acidified with sulphuric acid to pH 2.5 using a ratio of water to skim milk (equivalent) of 0.5:1. The protein concentrate was allowed 10 minutes in the wash water before being separated using a solid-bowl decanter to give a final protein concentrate. The protein concentrate was salted using 1.5% salt, formed into a cohesive mass and stored chilled at about 5°C until required for use.

Composition of the above protein concentrate is given in the Table 1.

**Table 1 Composition of protein concentrate prepared using mineral acid**

| **Component** | **Composition (%)** |
|---|---|
| Moisture | 51.5 |
| Fat | 0.33 |
| Protein | 43.4 |
| Salt | 1.65 |
| Calcium | 178.5 mM/kg |
| pH | 5.61 pH units |

### Lactic fermentation process

Two separate 500 L batches of pasteurise skim milk were prepared. In one batch the milk was cooled to 10°C and 1 part rennet (Australian Double Strength) added to 18,000 parts skim milk and left to react for several hours. To the other batch of milk, maintained at a temperature of approximately 26°C, a commercial strain of mesophillic Lactococcus lactis cremoris was added (0.1% v/v). This was left to ferment for about 16 h, wherein the pH had reached 4.6. The contents of both vessels were combined inline to yield a mixture with a pH of about 5.5 and then the mixture was held in a vessel for about 20 minutes whereupon the temperature was raised to about 44°C to induce curd formation. The curds and whey were then pumped over a screen to drain off the whey and the curd placed in a vessel where it was washed using 250 L of water acidified with dilute sulphuric acid to pH 2.3 for about 10 minutes. The washed curd was recovered using a horizontal bowl decanter, passed through an Urschel mill (mesh 3mm) to give a protein concentrate having about 50.4% solids and a fat content of 0.33%. The curd was packed in plastic bags (without the addition of optional salt [about 1.5%]) and frozen for subsequent cheese preparation. The protein concentrate had a calcium concentration of 94 mM/kg and a pH of 5.4.

### Example 1: Preparation of Flavour Concentrate: Blue Cheese - Reference

A mixture comprising the following was prepared in a flask according to the ingredients shown in Table 2

**Table 2 Ingredient quantities for Example 1**

| **Ingredient** | **Quantity (g)** |
|---|---|
| Sodium caseinate | 50 |
| Sodium chloride | 30 |
| Cream (40% fat) | 100 |
| Lipase (Enzidase) | 0.5 |
| *P. Roqueforti* spores (Visbyvac DIP DOSIS, Visby, USA) | 0.040 |
| Water | 1000 |

The mixture, without the spores was sterilised by heat at about 110°C for 10 minutes. After cooling to room temperature, the spores were added to the flask. The mixture had an initial pH of 6.3. The mixture was sprayed onto the surface of a thin layer of protein concentrate about 5-7 mm thick (as prepared in the General Example above) on a tray. The material was allowed to grow for two days in a humid room at 22-25°C and about 90% RH. The layer of substrate was turned over using a sterile spatula and the freshly exposed surface sprayed as per the first side. This was allowed to ripen for two days as above. The process was repeated so that after eight days the material had been treated and ripened four times.

This concentrate blue cheese potion was used as a flavour ingredient at the rate of 2-5% of the final cheese mass in the blender/cooker (cheese kettle).

### Example 2: Preparation of Flavour Concentrate: Mushroom - Camembert - Reference

A mixture was prepared in a flask according to the ingredients shown in Table 3:

**Table 3 Ingredient quantities for Example 2**

| **Ingredient** | **Quantity (g)** |
|---|---|
| Sodium caseinate | 50 |
| Sodium chloride | 30 |
| Cream (40% fat) | 100 |
| Lipase (Enzidase) | 0.5 |
| *P. candidium* spores (Texel VB 10D, Rhodia Foods) | 0.040 |
| Water | 1000 |

The mixture, without the spores, was sterilised at about 100°C for 10 minutes. After cooling to room temperature, the spores were added to the flask. The spore culture was applied to a layer of protein concentrate and grown as for the blue cheese concentrate described in Example 1.

This concentrated Mushroom - Camembert cheese potion was used as a flavour ingredient at the rate of 2-3% of the final cheese mass in the cooker-mixer (cheese kettle).

### Example 3: Preparation of Cheese Samples - Reference

The ingredients shown in Table 4 were placed in a twin-screw blender/cooker (Blentech Kettle model CI0045, Rohnert Park, California, USA):

**Table 4 Ingredient quantities for Example 3**

| **Ingredient** | **Quantity (kg)** |
|---|---|
| Protein concentrate (from mineral acid example above) | 4.0 |
| High fat cream (80% fat) | 2.05 |
| Blue cheese flavour concentrate (from Example 1 above) at 5% | 0.26 |
| Water | 0.75 |
| Salt | 0.015 |
| Tri-sodium citrate | 0.12 |
| Di-sodium phosphate | 0.06 |
| Citric acid | 0.04 |
| Condensate (estimated) | 0.9 |

The blocks of protein concentrate were shredded using an Urschel food grinder and placed with the other ingredients (including the flavour concentrate) in the Blentech Kettle. With the augers set to 140 rpm., the mixture was heated to 83°C with direct steam injection over a period of 4 minutes.

The resulting homogenous mass was poured onto trays (as slabs approximately 25-30 mm thick), which were then allowed to cool to about 10°C. The surface was coated with *P. candidium* spore mixture (0.2 g of the freeze-dried Texel VB 10D culture dispersed in 1 L of sterile water) using a hand sprayer, to give a uniform thin film. The sample was placed in a curing room at about 11°C for 5 days at high humidity. The cheese was peeled from the tray, inverted, and the fresh surface was sprayed as above and returned to the curing room for another 5 days. The cheese was then cut into segments and packed in vacuum sealed bags.

The flavour, aroma and texture were surprisingly similar to a mature Blue cheese made using conventional renneted milk setting, curd cutting and whey draining methods. The surface of the cheese was covered in a whitish layer of mould similar to Camembert or Brie.

### Example 4: Preparation of Cheese Samples - Reference

The ingredients shown in Table 5 were placed in a twin-screw blender/cooker (Blentech Kettle model CI0045, Rohnert Park, California, USA):

**Table 5 Ingredient quantities for Example 4**

| **Ingredient** | **Quantity (kg)** |
|---|---|
| Protein concentrate (from mineral acid example above) | 4.0 |
| High fat cream (80% fat) | 2.05 |
| Blue cheese flavour concentrate (from Example 1 above) at 3% | 0.156 |
| Water | 0.75 |
| Salt | 0.015 |
| Tri-sodium citrate | 0.12 |
| Di-sodium phosphate | 0.06 |
| Citric acid | 0.04 |
| Condensate (estimated) | 0.9 |

Previously frozen blocks of the protein concentrate were shredded using an Urschel food grinder and placed with the other ingredients (including the flavour concentrate) in the Blentech cooker. The ingredients were mixed for about 1 minute with the augers set to low speed approx. 40 rpm. The speed was increased to about 95-100 rpm and heat applied via the introduction of culinary steam. Upon reaching about 50°C, the auger speed was increased to 165 rpm and heating continued, reaching a final cook temperature of between 83-93 °C which was maintained for about 30 seconds.

The resulting homogenous fluid was poured onto trays (as slabs approximately 25-30 mm thick), which were then placed in a cool room overnight at about 5°C (without being coated with spores). The samples were then cut into segments, sealed in vacuum bags and frozen at -18°C.

Upon thawing, the flavour, aroma, and texture were surprisingly similar to a moderately ripened Blue cheese and showed no sign of serum separation or curd granularity.

### Example 5: Preparation of Cheese Samples - Reference

The ingredients shown in Table 6 were placed in a twin-screw blender/cooker (Blentech Kettle model CI0045, Rohnert Park, California, USA):

**Table 6 Ingredient quantities for Example 5**

| **Ingredient** | **Quantity (kg)** |
|---|---|
| Protein concentrate (from mineral acid example above) | 4.0 |
| High fat cream (80% fat) | 2.05 |
| Mushroom/Camembert cheese concentrate (from Example 2 above) at 3% | 0.156 |
| Blue cheese flavour concentrate (from Example 1 above) at 2% | 0.104 |
| Water | 0.75 |
| Salt | 0.015 |
| Tri-sodium citrate | 0.12 |
| Di-sodium phosphate | 0.06 |
| Citric acid | 0.04 |
| Condensate (estimated) | 0.9 |

The cheese was prepared according to the method in Example 3.

When the cheese had cooled to about 10°C, the surface was coated with the *P. candidium* mixture and allowed to ripen as in Example 3.

The ripened cheese had a taste and appearance similar to the cheese of Example 3, but a milder blue/mushroom flavour and a whitish coating of mould.

### Example 6: Preparation of Cheese Samples - Reference

The ingredients shown in Table 7 were placed in a twin-screw blender/cooker (Blentech Kettle model CI0045, Rohnert Park, California, USA):

**Table 7 Ingredient quantities for Example 6**

| **Ingredient** | **Quantity (kg)** |
|---|---|
| Protein concentrate (from General Example above) | 4.0 |
| High fat cream (80% fat) | 2.05 |
| Mushroom/Camembert cheese concentrate (from Example 2 above) at 2% | 0.104 |
| Blue cheese flavour concentrate (from Example 1 above) at 3% | 0.156 |
| Water | 0.75 |
| Salt | 0.015 |
| Tri-sodium citrate | 0.12 |
| Di-sodium phosphate | 0.06 |
| Citric acid | 0.04 |
| Condensate (estimated) | 0.9 |

The cheese was prepared according to the method in Example 4, i.e. the surface of the cheese was not coated with spores.

The flavour, aroma, and texture were surprisingly similar to a mild blue cheese.

The cheese samples produced in reference examples 2-6 had compositions in the ranges shown in Table 8:

**Table 8 Composition of samples**

| | |
|---|---|
| Moisture | 49-55% |
| Fat | 19-22% |
| Protein | 20-22% |
| Salt | 0.95-1.1% |
| pH | 5.59-5.68 |

### Preparation of cheese samples reference

The cheese samples prepared in examples 1-6 were prepared with the inclusion of salts of citrate and phosphate (often known in the art as melting salts) and cooked at a temperature of between 82-92°C. A feature of this invention is that the cheese may be produced without melting salts (using all natural ingredients). This was demonstrated in the preparation of a set of samples in a further series of experiments.

In accordance with the present invention, varying proportions of whey protein were incorporated into the product. All the samples containing whey protein concentrate were cooked at 90-92°C.

A set of samples was prepared without the need for melting salts and without the addition of flavour concentrate. Flavour concentrate is added to the cheese mixture as taught in reference Examples 3-6. After the preparation of the cooked mixture in the cooker, the molten cheese was poured into moulds. Once the cheese had cooled to room temperature, viable organisms may be applied to the surface of the cheese and then placed into a facility to allow the growth of the cultures using techniques and procedures demonstrated in reference Example 3.

The textures of the cheese samples were varied by adjusting the proportion of whey protein incorporated in the formulation. The process for the preparation of the cheese was as that for reference Example 4. The formulations used are shown in Table 9.

**Table 9 Ingredient quantities used in formulations**

| Formulation | 1* | 2* | 3* | 4* | 5* | 6 | 7 | 8 |
|---|---|---|---|---|---|---|---|---|
| Protein Concentrate kg | 6.00 (Mineral acid pH 5.7) | 4.00 (Lactic fermentation pH 5.4) | 4.00 (Mineral acid pH 5.7) | 4.00 (Lactic fermentation pH 5.4) | 4.00 (Mineral acid pH 5.7) | 2.636 (Mineral acid pH 5.7) | 3.30 (Mineral acid pH 5.7) | 3.60 (Mineral acid pH 5.7) |
| 77% fat cream kg | 3.30 | 2.20 | 2.20 | 2.20 | 2.20 | 2.4 | 2.40 | 2.40 |
| Water + steam condensed kg | 0 + 1.35 | 1.00 + 1.10 | 0 + 0.88 | 0 + 0.90 | 0+0.90 | 1.20 + 0.90 | 0.90 + 0.90 | 0.54 + 0.90 |
| Salt kg | 0.1125 | 0.075 | 0.075 | 0.075 | 0.075 | 0.075 | 0.075 | 0.075 |
| Citric kg | 0.040 | | | 0.010 | 0.020 | 0.020 | 0.020 | 0 |
| Lactic acid (80%) kg | 0 | 0.020 | 0.055 | 0 | 0 | 0 | 0 | 0.025 |
| Whey protein concentrate (ALACEN 392) kg | 0 | 0 | 0 | 0 | 0 | 0.780 | 0.52 | 0.26 |

| | | | | | | | | |
|---|---|---|---|---|---|---|---|---|
| ***- indicates comparative examples** Once the samples had been poured into moulds approx. 120 mm diameter to a depth of about 20 mm (a size typical of camembert cheese), they were placed in a freezer and stored at -12°C. | | | | | | | | |

At room temperature, all the samples were homogenous in appearance with a texture typical of a young/medium maturity camembert.

### Analytical results

Some of the samples of Table 9 were subject to compositional analysis. The results are shown in Table 10. Moisture was determined by the oven method of 105°C for 16 hours. The fat composition was determined using the Schmid-Bondzynski-Ratzlaff method.

**Table 10 Analysis of samples**

| **Formulation No. (of Table 9)** | **4** | **5** | **6** | **7** | **8** |
|---|---|---|---|---|---|
| Moisture (% w/w) | 51.4 | 52.0 | 46.4 | 51.7 | 50.8 |
| Fat (% w/w) | 27.5 | 23.4 | 27.6 | 23.9 | 29.3 |
| pH | 5.19 | 5.15 | 5.28 | 5.46 | 5.44 |

### Sensory evaluation

After thawing at room temperature, each of the samples from Table 9 was evaluated for colour, mouth feel, and taste. The results are summarised in Table 11.

**Table 11 Sensory comments**

| **Formulation No. (of Table 9)** | **Colour** | **Sensory comments** |
|---|---|---|
| 1 | Creamy / yellow colour | Firm, slightly salty with clean flavour and satisfying melt in mouth. |
| 2 | Creamy / yellow colour | Slightly softer, clean flavour and satisfying melt in the mouth. |
| 3 | Creamy / yellow colour | Pasty. |
| 4 | Creamy / yellow colour | Firm even texture, not sticky, not salty, slight lactic flavour. |
| 5 | Creamy / yellow colour | Bland overall, with slight salt and acid. Satisfying melt in the mouth. |
| 6 | Pale cream colour | Firm but slightly softer than 4 and 5. Slightly pasty in mouth. |
| 7 | Pale cream colour | Slightly salty. Slightly pasty. |
| 8 | Pale cream colour | Clean flavour but slightly pasty. |

The sensory results of the samples evaluated in Table 11 showed that the process of this invention could prepare a base cheese stock that had highly desirable sensory characteristics from which flavour agents c be added (of reference Examples 4 & 6 but without the use of melting salts) or applied to the surface (of reference Examples 3 & 5 but without the use of melting salts).

### Shredding

Samples of Formulation 1 from Table 9 were removed from frozen storage and shredded at various intervals using a Zyliss type 92/1300 grater. Samples were portioned by hand so that chunks could be placed into the mouth of the grater. A partially frozen sample grated within an hour of removal from the freezer into ambient temperature, milled extremely well with no stickiness and few fines. A similar sample that had been at room temperature for 5 hours and which was fully thawed and described as 'soft', also grated well with less fines than the frozen sample. A further sample that had been thawed by holding in a refrigerator at approximately 5°C for about 22 hours also grated well but with more fines than either of the above samples.

This experiment showed that useful samples could be successfully recovered from frozen storage and grated using samples at a wide range of temperatures into a particulate product that has nonlimiting applications for (pizza) toppings, sprinkling on vegetables and salads, and as a convenient additive in the preparation of sauces and the like.

The above examples are illustrations of the practice of the invention.

## Claims

1. A process for preparing a blue cheese, the process comprising:
(a) providing a protein concentrate comprising whey protein concentrate,
(b) providing a flavour concentrate using at least one strain of organism,
(c) mixing the protein concentrate with a source of fat and/ or liquid if required and heating at 90 to 92°C for between 10 seconds and 30 minutes to form a coagulated cheese mass,
(d) adding the flavour concentrate before, during or after step (c).

2. A process for preparing blue cheese, the process comprising:
(a) providing a protein concentrate comprising whey protein concentrate,
(b) providing a flavour concentrate using at least one strain of organism,
(c) mixing the protein concentrate and flavour concentrate with a source of fat and/ or liquid if required and heating at 90 to 92°C for between 10 seconds and 30 minutes to form a coagulated cheese mass,
(d) cooling the resulting coagulated cheese mass to form a cheese precursor with an exposed surface,
(e) applying viable organisms to the exposed surface,
(f) allowing the cheese to ripen.

3. A process for preparing blue cheese, the process comprising:
(a) providing a protein concentrate comprising whey protein concentrate,
(b) providing a flavour concentrate using at least one strain of organism,
(c) mixing the protein concentrate and flavour concentrate with a source of fat and/ or liquid if required and heating at 90 to 92°C for between 10 seconds and 30 minutes to form a coagulated cheese mass,
(d) cooling the coagulated cheese mass and mixing in a flavour concentrate containing viable organisms to form a cheese precursor,
(e) optionally dividing the cheese precursor into consumer portions,
(f) allowing the cheese precursor or the portions to ripen.

4. A process according to claim 1, 2 or 3, wherein at step (c) mixing the protein concentrate and flavour concentrate with a source of fat and/or liquid is present.

5. A process as claimed in claims 1, 2 and 3 wherein the cheese or cheese precursor is divided into portions.

6. A process as claimed in any of the preceding claims wherein the cheese is subjected to freezing.

7. A process as claimed in claim 6 wherein following the freezing step, the cheese is thawed and further ripening occurs.

8. A process as claimed in claim 1, 3 or 4 further comprising applying viable organisms to the exposed surface, and allowing the cheese to ripen.

9. A process as claimed in any of the preceding claims wherein the precursor cheese or the cheese is shredded or particulated.

10. A process as claimed in any of the preceding claims wherein the protein concentrate is selected from a milk protein concentrate, a rennetted milk or a reconstituted milk protein concentrate.

11. A process as claimed in any one of the preceding claims wherein the flavour concentrate comprises at least one edible mould.

12. A process as claimed in claim 11 wherein the mould organism is selected from the family of *Penicillium, Mucor, Cladosporium, Geotrichum, Epicoccum,* or *Sporotrichum.*

13. A process as claimed in claim 12 wherein the mould organism is *P. candidium* or *P. roqueforti.*

14. A process as claimed in any one of the preceding claims wherein the flavour concentrate further comprises a flavour-enhancing bacterium, selected from cultures producing lactic acid propionic acid or butyric acid.

15. A process as claimed in any one of the preceding claims wherein the percentage of flavour concentrate relative to the total coagulated cheese mass is in the range 0.1% to 20%.

16. A process as claimed in any of the preceding claims wherein the fat source, which is added to the protein concentrate, is cream, butter or edible oil.

17. A process as claimed in any of the preceding claims where following the heating step, the cheese precursor is stored at a temperature between 5°C and 35°C and a relative humidity greater than 80%.

18. A process as claimed in claim 17 wherein there is facilitation of contact between air and the cheese or cheese precursor.

19. A process as claimed in claim 17 or claim 18 wherein the cheese precursor is stored at a temperature between 10°C and 20°C.

## Patentansprüche

1. Verfahren zur Herstellung eines Blauschimmelkäses, wobei das Verfahren umfasst:
(a) Bereitstellen eines Proteinkonzentrats, das Molkeproteinkonzentrat umfasst,
(b) Bereitstellen eines Geschmackskonzentrats, das zumindest einen Organismusstamm verwendet,
(c) Vermischen des Proteinkonzentrats mit einer Fett- und/oder Flüssigkeitsquelle, sofern erforderlich, und Erhitzen auf 90 bis 92°C für 10 Sekunden bis 30 Minuten, um eine geronnene Käsemasse zu bilden,
(d) Hinzufügen des Geschmackskonzentrats vor, während oder nach Schritt (c).

2. Verfahren zur Herstellung von Blauschimmelkäse, wobei das Verfahren umfasst:
(a) Bereitstellen eines Proteinkonzentrats, das Molkeproteinkonzentrat umfasst,
(b) Bereitstellen eines Geschmackskonzentrats, das zumindest einen Organismusstamm verwendet,
(c) Vermischen des Proteinkonzentrats und Geschmackskonzentrats mit einer Fett- und/oder Flüssigkeitsquelle, sofern erforderlich, und Erhitzen auf 90 bis 92°C für 10 Sekunden bis 30 Minuten, um eine geronnene Käsemasse zu bilden,
(d) Abkühlen der resultierenden geronnenen Käsemasse zur Bildung einer Käsevorstufe mit einer freiliegenden Oberfläche,
(e) Auftragen wachstumsfähiger Organismen auf die freiliegende Oberfläche,
(f) Reifenlassen des Käses.

3. Verfahren zur Herstellung von Blauschimmelkäse, wobei das Verfahren umfasst:
(a) Bereitstellen eines Proteinkonzentrats, das Molkeproteinkonzentrat umfasst,
(b) Bereitstellen eines Geschmackskonzentrats, das zumindest einen Organismusstamm verwendet,
(c) Vermischen des Proteinkonzentrats und Geschmackskonzentrats mit einer Fett- und/oder Flüssigkeitsquelle, sofern erforderlich, und Erhitzen auf 90 bis 92°C für 10 Sekunden bis 30 Minuten, um eine geronnene Käsemasse zu bilden,
(d) Abkühlen der geronnenen Käsemasse und Einmischen eines Geschmackskonzentrats, das wachstumsfähige Organismen enthält, zur Bildung einer Käsevorstufe,
(e) gegebenenfalls Teilen der Käsevorstufe in verbrauchergerechte Portionen,
(f) Reifenlassen der Käsevorstufe oder der Portionen.

4. Verfahren nach Anspruch 1, 2 oder 3, wobei in Schritt (c) das Vermischen des Proteinkonzentrats und Geschmackskonzentrats mit einer Fett- und/oder Flüssigkeitsquelle vorhanden ist.

5. Verfahren nach den Ansprüchen 1, 2 und 3, wobei der Käse oder die Käsevorstufe in Portionen geteilt wird.

6. Verfahren nach irgendeinem der vorhergehenden Ansprüche, wobei der Käse einem Einfrieren unterzogen wird.

7. Verfahren nach Anspruch 6, wobei auf den Einfrierschritt folgend der Käse aufgetaut wird und ein weiteres Reifen erfolgt.

8. Verfahren nach Anspruch 1, 3 oder 4, ferner umfassend das Auftragen wachstumsfähiger Organismen auf die freiliegende Oberfläche und Reifenlassen des Käses.

9. Verfahren nach irgendeinem der vorhergehenden Ansprüche, wobei die Käsevorstufe oder der Käse vorzerkleinert oder fein zerkleinert wird.

10. Verfahren nach irgendeinem der vorhergehenden Ansprüche, wobei das Proteinkonzentrat aus einem Milchproteinkonzentrat, einer mit Lab versetzen Milch oder einem rekonstituierten Milchproteinkonzentrat ausgewählt wird.

11. Verfahren nach irgendeinem der vorhergehenden Ansprüche, wobei das Geschmackskonzentrat zumindest einen Speiseschimmel umfasst.

12. Verfahren nach Anspruch 11, wobei der Schimmelorganismus aus der *Penicillium-*, *Mucor-, Cladosporium-, Geotrichum-, Epicoccum-* oder *Sporotrichum-*Familie ausgewählt ist.

13. Verfahren nach Anspruch 12, wobei der Schimmelorganismus *P. candidium* oder *P. roqueforti* ist.

14. Verfahren nach irgendeinem der vorhergehenden Ansprüche, wobei das Geschmackskonzentrat ferner ein geschmacksverstärkendes Bakterium umfasst, das aus Kulturen ausgewählt ist, die Milchsäure, Propionsäure oder Buttersäure erzeugen.

15. Verfahren nach irgendeinem der vorhergehenden Ansprüche, wobei der Prozentsatz des Geschmackskonzentrats im Verhältnis zur geronnenen Gesamtkäsemasse im Bereich von 0,1 % bis 20% liegt.

16. Verfahren nach irgendeinem der vorhergehenden Ansprüche, wobei die Fettquelle, die dem Proteinkonzentrat hinzugefügt wird, Sahne, Butter oder Speiseöl ist.

17. Verfahren nach irgendeinem der vorhergehenden Ansprüche, wobei auf den Erhitzungsschritt folgend die Käsevorstufe bei einer Temperatur zwischen 5°C und 35°C und einer relativen Luftfeuchtigkeit von mehrals 80% gelagert wird.

18. Verfahren nach Anspruch 17, wobei der Kontakt zwischen Luft und dem Käse oder der Käsevorstufe erleichtert wird.

19. Verfahren nach Anspruch 17 oder Anspruch 18, wobei die Käsevorstufe bei einer Temperatur von 10 °C bis 20 °C gelagert wird.

## Revendications

1. Procédé de préparation d'un bleu, le procédé comprenant les étapes consistant à :
(a) fournir un concentré de protéines consistant en un concentré de protéines de lactosérum ;
(b) fournir un concentré d'arôme utilisant au moins une souche d'un organisme ;
(c) mélanger le concentré de protéines avec une source de matières grasses et/ou éventuellement de liquide, et chauffer de 90 à 92 °C pendant 10 secondes à 30 minutes afin de former une masse de fromage coagulée ;
(d) ajouter le concentré d'arôme avant, pendant ou après l'étape (c).

2. Procédé de préparation d'un bleu, le procédé comprenant les étapes consistant à :
(a) fournir un concentré de protéines consistant en un concentré de protéines de lactosérum ;
(b) fournir un concentré d'arôme utilisant au moins une souche d'un organisme ;
(c) mélanger le concentré de protéines et le concentré d'arôme avec une source de matières grasses et/ou éventuellement de liquide, et chauffer de 90 à 92 °C pendant 10 secondes à 30 minutes afin de former une masse de fromage coagulée ;
(d) refroidir la masse de fromage coagulée résultante afin de former un précurseur de fromage avec une surface exposée ,
(e) appliquer des organismes viables sur la surface exposée ,
(f) laisser le fromage s'affiner.

3. Procédé de préparation d'un bleu, le procédé comprenant les étapes consistant à :
(a) fournir un concentré de protéines consistant en un concentré de protéines de lactosérum ;
(b) fournir un concentré d'arôme utilisant au moins une souche d'un organisme ;
(c) mélanger le concentré de protéines et le concentré d'arôme avec une source de matières grasses et/ou éventuellement de liquide, et chauffer de 90 à 92 °C pendant 10 secondes à 30 minutes afin de former une masse de fromage coagulée ;
(d) refroidir la masse de fromage coagulée et la mélanger dans un concentré d'arôme contenant des organismes viables afin de former un précurseur de fromage ;
(e) éventuellement diviser le précurseur de fromage en portions de consommation ;
(f) laisser le précurseur de fromage ou les portions s'affiner.

4. Procédé selon la revendication 1, 2 ou 3, dans lequel l'étape (c) comprend le mélange du concentré de protéines et du concentré d'arôme avec une source de matières grasses et/ou de liquide.

5. Procédé selon les revendications 1, 2 et 3, dans lequel le fromage ou le précurseur de fromage est divisé en portions.

6. Procédé selon l'une quelconque des revendications précédentes, dans lequel le fromage est soumis à une congélation.

7. Procédé selon la revendication 6, dans lequel après l'étape de congélation, le fromage est décongelé et soumis à un affinage.

8. Procédé selon la revendication 1, 3 ou 4, comprenant en outre l'application d'organismes viables sur la surface exposée, puis dans lequel le fromage est ensuite soumis à un affinage.

9. Procédé selon l'une quelconque des revendications précédentes, dans lequel le précurseur de fromage ou le fromage est râpé ou réduit en particules.

10. Procédé selon l'une quelconque des revendications précédentes, dans lequel le concentré de protéines est choisi dans le groupe constitué d'un concentré de protéines de lait, de lait emprésuré ou d'un concentré de protéines de lait reconstitué.

11. Procédé selon l'une quelconque des revendications précédentes, dans lequel le concentré d'arôme comprend au moins une moisissure alimentaire.

12. Procédé selon la revendication 11, dans lequel l'organisme de type moisissure est choisi dans le groupe constitué de la famille de *Penicillium, Mucor, Cladosporium, Geotrichum, Epicoccum* ou *Sporotrichum.*

13. Procédé selon la revendication 12, dans lequel l'organisme de type moisissure est *P. candidium* ou *P. roqueforti.*

14. Procédé selon l'une quelconque des revendications précédentes, dans lequel le concentré d'arôme comprend en outre une bactérie aromatisante, choisie parmi des cultures produisant de l'acide lactique, de l'acide propionique ou de l'acide butyrique.

15. Procédé selon l'une quelconque des revendications précédentes, dans lequel le pourcentage de concentré d'arôme par rapport à la masse totale de fromage coagulé est compris entre 0,1 % et 20 %.

16. Procédé selon l'une quelconque des revendications précédentes, dans lequel la source de matières grasses, qui est ajoutée au concentré de protéines, est de la crème, du beurre ou de l'huile alimentaire.

17. Procédé selon l'une quelconque des revendications précédentes, dans lequel après l'étage de chauffage, le précurseur de fromage est stocké à une température comprise entre 5 °C et 35 °C et à une humidité relative supérieure à 80 %.

18. Procédé selon la revendication 17, qui comprend un moyen facilitant le contact entre l'air et le fromage ou le précurseur de fromage.

19. Procédé selon la revendication 17 ou 18, dans lequel le précurseur de fromage est stocké à une température comprise entre 10 °C et 20 °C.
